# EUROPEAN PATENT SPECIFICATION

(11) **EP 3 861 179 B1**
(45) Date of publication and mention of the grant of the patent: **17.07.2024**
(21) Application number: 19805119.5
(22) Date of filing: 03.10.2019
(51) Int. Cl.: E04B 1/04, E04B 1/61, F16B 5/00, E04C 2/04

(54) **PRECAST CONCRETE PANEL JOINING SYSTEM, METHOD OF MAKING A PANEL JOINT, PANEL JOINT OBTAINED BY THE METHOD**
VERBINDUNGSSYSTEM FÜR VORGEFERTIGTE BETONPLATTE, VERFAHREN ZU HERSTELLUNG EINER PLATTENVERBINDUNG, NACH DEM VERFAHREN HERGESTELLTE PLATTENVERBINDUNG
SYSTÈME D'ASSEMBLAGE DE PANNEAUX EN BÉTON PRÉFABRIQUÉ, MÉTHODE D'ASSEMBLAGE DE PANNEAUX, JOINT DE PANNEAU OBTENU À L'AIDE DUDIT PROCÉDÉ

(30) Priority: 04.10.2018 CZ 20180528
(43) Date of publication of application: 11.08.2021
(73) Proprietor: PPZS s.r.o., 16100 Praha 6 - Ruzyne Czech Republic (CZ)
(72) Inventor: FLOREK, Miroslav, 38232 Velesín (CZ)
(74) Representative: Sedlák, Jirí
(86) International application number: PCT/CZ2019/050043
(87) International publication number: WO 2020/069685

(56) References cited:
- DE-A1- 102015 200 105
- US-A- 5 272 850

## Description

### Field of the Invention

The invention relates to the field of building industry, in particular the construction of external load-bearing and internal walls and partitions made of precast concrete panels.

### Background of the Invention

When constructing external walls and partitions made of precast concrete panels, it is necessary to solve the problem of accurate positioning of the panels in a vertical position so that adjacent panels precisely connect to each other and form an ideally precise plane on the outer and inner sides of the wall. Any inaccuracy of the mounting increases the laboriousness and costs of subsequent surface finishes. Furthermore, the exact position and structure of the wall panels is important for their binding to the ceiling structure.

Handling of large and heavy panels is difficult, they must be mounted by means of a crane and inaccuracies and irregularities of substructures play a big part in mounting them.

The panels are vertically stabilized by means of fixing spacers, whose one end is fixed to the hidden anchor embedded in the panel wall (or the anchor is drilled into the wall panel directly on site) and the other end of the fixing spacers is fixed to the base or ceiling plate. Anchoring by means of these elements is relatively laborious, lengthy and inaccurate, while the supports and rods interfere with other construction activities in the space around the panel. The anchoring holes in the panel walls have to be trowelled after removal of the fixing spacers, which results in an additional operation.

On their contact surfaces fitting one over the other, the panels are usually provided with means for their interconnection by embedding in concrete or other solidifying jointing material. Typically, these are opposed recesses forming a vertical cavity into which grout concrete is poured to fix the panels in a definite relative position. In case of a request for such interconnection of the panels, which has to transfer tensile forces, metal meshes that overlap each other will be additionally moved from both adjacent panels into the cavity. The vertical fitting is inserted into the meshes from the top and the entire cavity is poured with concrete. If so described method does not reach the necessary bearing capacity for the transfer of tensile forces to ensure the required rigidity of construction, reinforced concrete ring beams must be made on all load-bearing walls in the ceiling level or immediately below it to carry tensile forces, the presence of which, along with the requirements for the depth of mounting of ceiling parts on the load-bearing walls, raises demands on the required thickness of load-bearing walls which must therefore be larger, than it would be required for the actual static load capacity of the walls. The disadvantage of thus constructed precast concrete wall panels and a method of making the vertical joints consist mainly in inaccuracy and laboriousness of their setting in a vertical position, laboriousness of subsequent corrections and technological pause while waiting for hardening of the concrete in the vertical joints before further installation, which, especially in the case of installation of precast ceilings that do not require pouring of concrete, pouring of concrete is, for the connection wall panels, one of the operations that require the arrival and departure of other additional technology. Another considerable disadvantage is the need for a greater thickness of the load-bearing wall panels.

To refine the panelling, a solution is disclosed in the EP 2675959 patent, where the contact surfaces of the panels are toothed, and pairs of tongues and grooves are formed on the contact surfaces of engaged toothed parts, as well as a grouting channel for pouring of concrete or other solidifying jointing material. The grouting channel is formed by two opposite grooves of a semi-circular cross-section. The panel joint is finally connected by means of a screw connection. Although the solution disclosed in the EP 2675959 patent specifies and partially facilitates the fixation of the relative position of the contacting panels, the grouting channel has no fixing fitting, so that after the concrete is poured, the panels are pushed apart. The fixation of their position and connection must be solved by means of a screw connection, while fixing the position of the panels depends on the ratio between the tightening of the screw connection and the pressure of the grout concrete. Another disadvantage is that the teeth, tongues and grooves on the panel according to EP 2675959 cannot be obtained by horizontal mould casting in a single operation. Due to the fact that the panel has two ends, one end of the panel must be positioned during horizontal mould casting so that the concrete is prevented from pouring into the tongues and grooves by means of an air pocket in the mould.

Panel joining by means of screw connection is also described in the utility design CZ 25509 that relates to the construction of thermal-insulation sandwich panels, not precast concrete elements. The panels are provided with tongues and grooves on contact surfaces, through which the locking screw passes after mounting.

Furthermore, the construction of precast concrete wall panels and the panel joint according to the DE 4007344 document are known, wherein the cavity between the contact surfaces of adjacent panels is formed by only two semi-circular grooves, arranged opposite each other. They form a cylindrical cavity in which a cylindrical fitting consisting of vertical rods and round brackets is inserted and the cavity is poured with concrete. Although the concrete panel constructed in this way can be produced by horizontal mould casting in a single operation, the problem of fixing the relative position of the panels during assembly, which has to be solved in known manner by means of anchor supports and rods, is not solved. The relative position of the panels is finally fixed when the concrete is poured and solidified in the cavity. The design of this panel joint also does not allow transferring tensile forces in the direction of the wall, i.e. in order to achieve the necessary load-bearing capacity for laying the ceiling structure, the external ring beam must be reinforced separately and additionally after fabrication of walls.

The objective of the invention is to eliminate the disadvantages of the above-described solutions known from the background of the invention and to provide a precast concrete panel which permits simple, fast and accurate fixation of adjacent panels during assembly, without the use of fixing spacers, reduces the consumption of concrete or other jointing material on the construction site, or excludes one concreting operation and speeds up the installation of the external and internal load-bearing walls and partitions. Another objective of the invention is that the structure made of precast concrete panel allows the transfer of tensile forces in the direction of the wall and at the same time provides sufficient load-bearing capacity for laying and bonding the ceiling structure with walls without additional reinforcement of the peripheral ring, i.e. with further material and labour savings.

### Summary of the Invention

The deficiencies of the known solutions for the construction of precast panel joining systems are eliminated by the precast concrete panel joining system and the method of making the panel joint according to the present invention.

On one contact side, the precast concrete panel is provided with at least one tongue and on the second contact side, it is provided with at least one groove for engaging the tongue. At the same time, a longitudinal furrow is created on the tongue and on the groove, which in the position of insertion of the tongue into the groove forms from the top an open cavity between adjacent panels. The summary of the invention rests in the fact that the inside of the panel includes at least one anchor consisting of a jaw connected to the root. The edge section of the jaw follows at least part of the shape of the tongue and/or the groove, and is provided with a recess following at least part of the inner periphery of the cavity. When the tongues are inserted into the grooves of adjacent panels, the anchor pin is inserted into the cavity created by the recess of both panels. The pin is further fixed by means of sealing quick-setting fixative compound, thus achieving quick and stable joint between the panels without the use of fixing spacers. The cavity can only be opened from above or only from below, or can be made through the entire height of the panel. The precast concrete panel is mounted on each side of the panel by means of a pair of superimposed jaws, whose recesses are formed by a metal insert. This insert forms part of the cavity and connects the two jaws. In this embodiment, a higher strength of the entire upper region of the panel is achieved as well as the possibility of using a metal insert forming a stronger cavity for receiving the anchor pin

According to the invention, the precast concrete panel has both contact sides of the panel provided with both a tongue and a groove, continuously related to the tongue. The cavity and the anchor are arranged on both sides of the panel in the transition region between the tongue and the groove. The jaws are also arranged on both sides of the panel and the edge section of the jaw corresponds to the section of the tongue, groove and edge contact surfaces of the panel. This embodiment has the advantage of improving the resulting flatness of the wall formed from the individual panels of the invention.

The root of the anchor may be conventional, i.e. it may end cast in the panel concrete, but in another preferred embodiment, the root of the anchor passes through the panel from one side to another, while connecting the jaws on both ends of the panel and forming horizontal reinforcement of the panel. This embodiment further improves preferably the transfer of tensile forces within the resulting panel structure, thus avoiding the need to address the transfer of these forces by increasing the thickness of the panel to form a ring structure at the head of the wall. An advantage is achieved by increasing the thickness of the panel with a horizontal reinforcement composed of anchor root, when for the transfer of the prescribed tensile force 70 kN, it is possible to produce panels with a thickness of 100 mm instead of 200 mm, where 200 mm is necessary so that in addition to the head of ceiling panels, the ring structure reinforcing the upper part of the structure under the ceiling can fit on the upper edge of the panel. The horizontal reinforcement thus forms an integrated ring reinforcement.

In a preferred embodiment, the precast concrete panel has a recess with a semi-circular cross-section with an insert in a shape of a hollow half-cylinder. This makes it possible to use preferably a commercially available tubular metallurgical material for the manufacture of the insert. Therefore, also in this preferred embodiment, the insert is made of metal and forms an integral weldment with a jaw, which is also made of metal and has the shape of a flat plate. The shape of the edge section of the jaw corresponds to that of the contact side of the panel.

The method of making a panel joint of precast concrete panels according to the foregoing description of the invention solves the task of facilitating the assembly of adjacent panels of a future panel structure before the jointing material is poured, thus eliminating the need for further auxiliary fixation. The method consists in that after arrangement of the panels side by side in vertical position and engaging the tongues into the grooves, an anchor pin is inserted into the cavity between the panels formed by recesses of the jaws, fixing the entire joint and preparing it for embedding with jointing material, without the need for anchoring the panels in order to define mutual flatness. For this purpose, the peripheral shape of the anchor pin corresponds to the peripheral shape of the cavity and in a preferred embodiment, both have a circular cross-section. To anchor the pin in the cavity, some of the quick-setting fixative compound is preferably used, known, for example, as a chemical anchor. Another preferred embodiment of the invention is that the anchor pin extends from the cavity above the upper edge of the lower pair of panels, and extends into the cavity formed by the pair of panels arranged above the lower pair of panels. Thus, it is possible to simply joint higher wall structures with only one anchor pin.

The invention in joining the panels allows to reduce the cost of the amount of sealing jointing material (most often concrete) and saves working time by eliminating the need for additional auxiliary anchoring of the position of the panels before grouting and other possible tensile fixations by screw connections.

Moreover, the shape of the anchor corresponds to the shape of the panel and is therefore not necessary after jointing to perform additional jointing and corrections of the surface of the panels. The additional coverage of the anchor with concrete protects the anchor against corrosion so that the anchor itself can be made of rusty steel.

The use of the anchor pin offers the advantage that such a joint is on one hand sufficiently strong and on the other hand, until the pin is hardened with a quick-setting fixative compound, the joint is easy to dismantle and thus usable as a temporary anchoring of the panel assembly before finishing the position of panels in the final panel structure.

The preferred design of the anchor is predetermined for high tensile load-bearing capacity of the panel assembly, which mainly brings advantages in eliminating the need to use additional elements for interconnecting the panels. In addition, the anchor can withstand the tensile forces that in other solutions have to be transferred by a ring which is additionally made on the panel assembly, and is therefore preferable to use it as part of an integrated ring in the wall panels. This eliminates the operation of binding additional ring reinforcement, which is otherwise necessary to shutter and concrete. Such panel may be thinner while maintaining the specified current load-bearing capacity of ceilings, thus decreasing the costs of vertical structures, increasing the yield of the built-up area by saving wall thickness and the associated reduction of environmental burden.

The proposed design of the panels further provides the advantage of simpler casting of the panels, where the mould can be a one-piece mould and the panel can be cast horizontally. The design of the anchor also allows its stable positioning in the casting mould, where its position will be stable and with the use of a flexible insert filling it will be possible to cast the panel on both contact surfaces in a single operation at once without using a split mould.

### Brief description of drawings

The invention will be explained in detail by drawings which illustrate:
- Fig. 1: a view of the existing panels fixed by means of anchor supports and rods
- Fig. 2: a perspective view of the precast concrete panel of the invention,
- Fig. 3: a sectional view of the panel j oint of two precast concrete panels of the invention, without an anchor pin
- Fig. 4: a sectional view of the panel in one-piece mould,
- Fig. 5: a sectional view of the panel in multi-piece mould,
- Fig. 6: a sectional view of the panel for the removal from multi-piece mould,
- Fig. 7: a sectional view of the panel during horizontal casting of both sides, showing the problem of concrete leakage,
- Fig. 8: a sectional view of the panel of the invention with a flexible casting core during removal from the mould,
- Fig. 9: an example of a plan view of the panel composition of the invention,
- Fig. 10: an example of a plan view of the panel composition of the invention,
- Fig. 11: a single anchor with root,
- Fig. 12: a double anchor with two roots and insert,
- Fig. 13: a double anchor with insert and root running through the entire panel and forming an integrated ring reinforcement.
- Fig. 14: a sectional view of the panel joint as shown in Fig. 3, with the anchor pin embedded in the fixative compound.
- Fig. 15: an assembly of the panels arranged one above the other, connected by means of an anchor pin.

### Examples of the invention embodiments

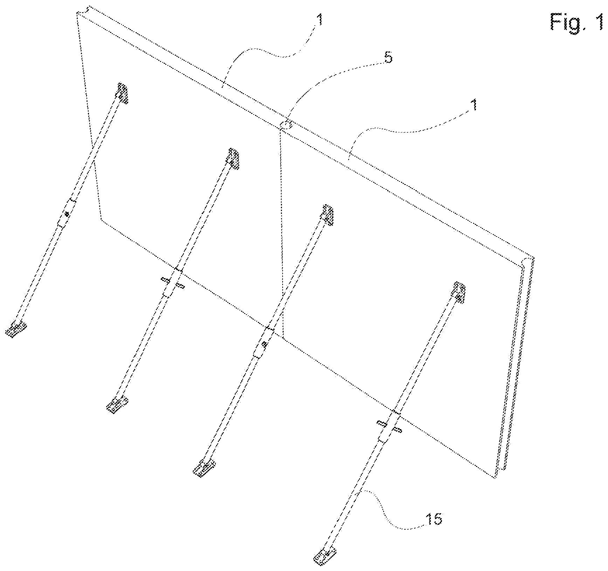

Fig. 1 illustrates the background of the invention and technology based on the need for fixing the panels **1** by means of fixing spacers **15** and rods. This anchoring operation is, in addition to the arrangement of panels in a vertical position, needed to achieve the plan flatness of two related panels **1**. This flatness is necessary not only for the formation of the cavity **5** between the panels **1**, for its subsequent embedding with grout concrete, but also for the subsequent binding of the panels **1** with the ceiling structure. Any asymmetry and deviation not only cause problems in the connection of the individual panels **1** of the panel structure, but also the necessity of subsequent technological operations to adjust the flatness of the wall surfaces, which increases the overall costs of construction. In order to anchor the fixing spacers **15**, it is necessary to provide additional anchor elements which are formed during the manufacture of the panel **1** or subsequently during its assembly on the construction site. The application of the spacers **15** is time-consuming and evokes the need for further technological fixtures on the construction site in the form of the spacers **15.** The transfer of tensile forces should be solved by anchoring the panels **1** to each other by means of meshes, screws, etc.

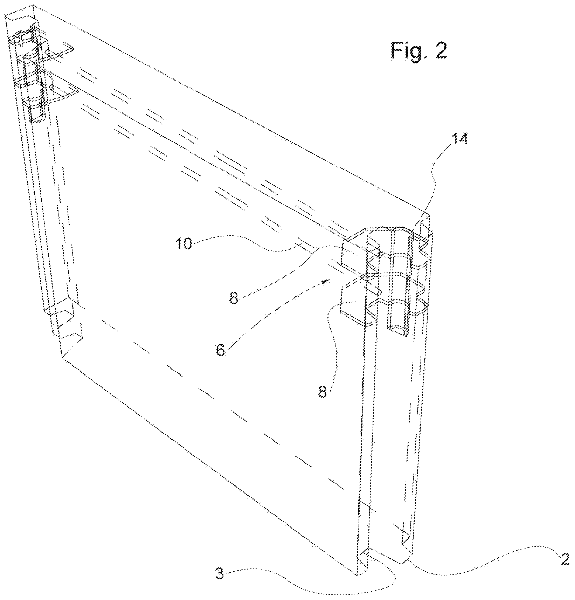

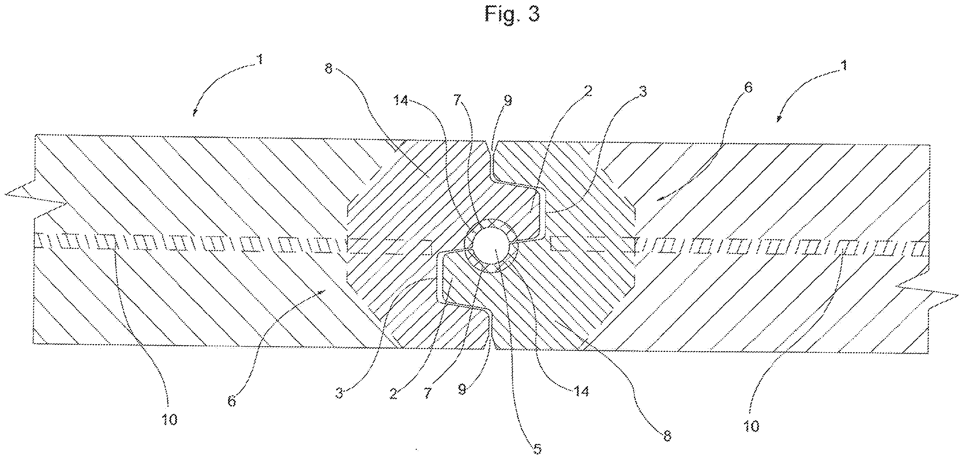

Fig. 2 and 3 show the solution to anchoring the vertical stability of the panels **1** with the use of the principle of the tongue **2** and the groove **3** of the invention in the form of a perspective view of the precast concrete panel **1** and a horizontal section of two panels **1** fitting against each other. In principle, for the design of the panel joints it is sufficient to make a joint using one tongue **2** on one panel **1** and the opposite groove **3** on the other panel **1**, which will fit into each other, with sufficiently precise casting technology, thus ensuring the appropriate flatness. This non-illustrated joint may perform a basic function, but to improve flatness and halve the required number of joints, the more preferable solution is to use a double tongue **2** and groove **3** design as shown in Fig. 2 and 3, with one side of each panel **1** provided with both the tongue **2** and the groove **3,** which engage in axially symmetric termination of the contact side of the adjacent panel **1**.

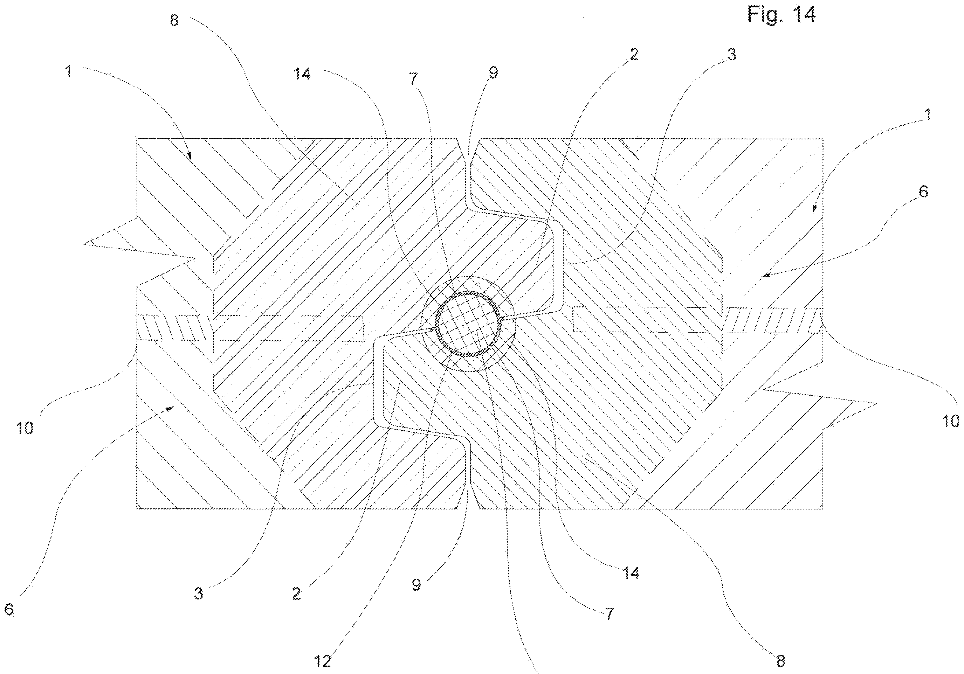

The design of the panels **1** ensures a firm fit of the tongues **2** into the grooves **3** and at the same time the formation of a cavity **5** between adjacent panels **1**,as shown in Fig. 3, intended for fixation by means of an anchor pin **11** and a quick-setting fixative compound **12.** The cavity **5** is reinforced by jointing two recesses **7** formed in the jaws **8** of the anchors **2** of the matched panels **1** to be jointed. Using the pin **11** with the fixative compound **12** as shown in Fig. 14 is important for improved strength and stability of the vertical flatness of the joint, but without using a fixative compound **12** it may be used as auxiliary, easy-to-adjust panel structure, prior to its final fixation. The anchor pin **11** can be made of rusting metal and has the dimensions and shape of the cavity **5** formed, so that when placed in the cavity **5** and embedded in the fixative compound **12**, a very strong joint is formed, as shown in Fig. 14.

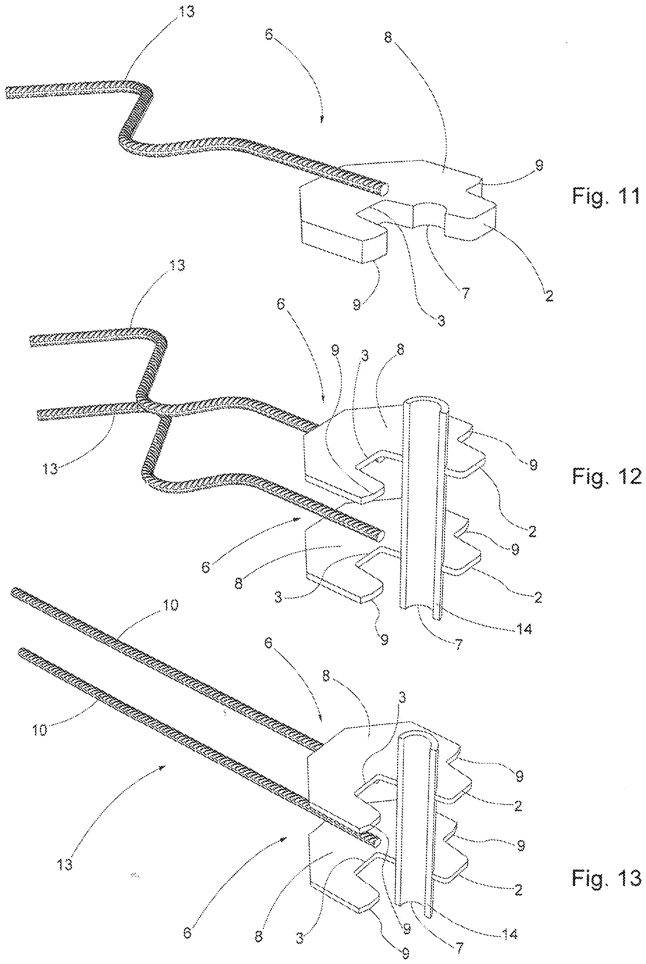

The shape of the anchor **2** fully follows the shape of the contact surfaces of the panels **1**, see Fig. 11, 12, 13. In terms of the structure of panels **1**, it is possible to use the principle of the installation of one, two or more anchors **2** composed of metal flat jaws **8** and a metal root **13** welded to them. The function of the root **13** of the anchor **2** is in principle the fixation of the part of the anchor **2** made of bent or straight ribbed steel in the concrete compound of the panel **1**. In the case of using an anchor **6** on both sides of the panel **1**, it is preferable to connect the jaws **8** with one root **13** in the form of a horizontal reinforcement **10** running through the entire length of the panel **1** and firmly welded to the jaws **8** at both ends of the panel **1**, see Fig. 13. The horizontal reinforcement **10** thus forms an integrated ring reinforcement in the head part of the panel **1** at the same time. In the case of one jaw **8** with one root **13,** it is preferable due to increased tensile strength of fixation of the anchor **2** that the root **13** was formed by bent ribbed steel as shown in Fig. 11.

The use of the anchors **2** results in the resulting panel structure being able to transfer and retain the tensile forces required for the reinforcing ring. To increase the strength and reinforce the structure of the cavity **5** for the pin **11**, it is proposed to create on each side of the panel **1** one combination of at least two anchors **6,** which are in the region of the recess **7** connected by means of a metal insert **14** in the shape of hollow half-cylinder, see Fig. 12 and 13.

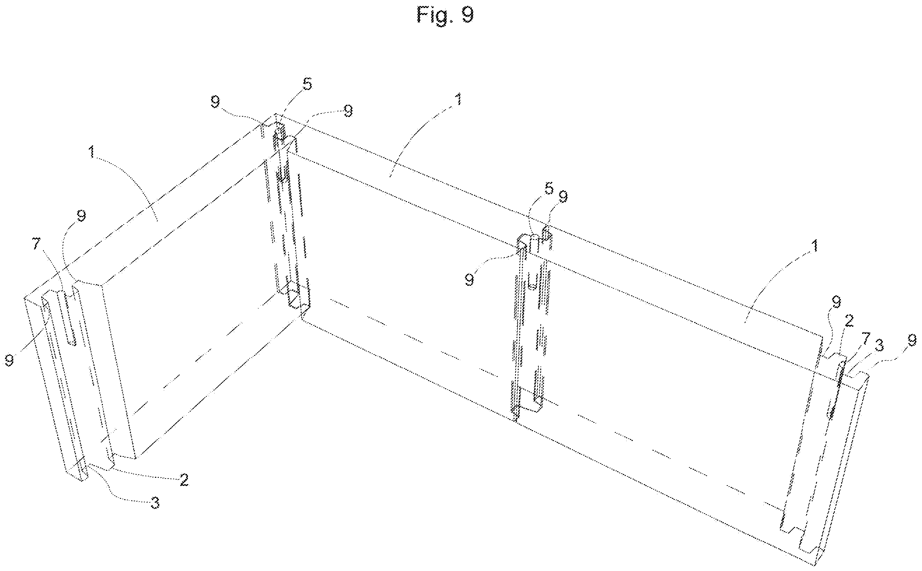

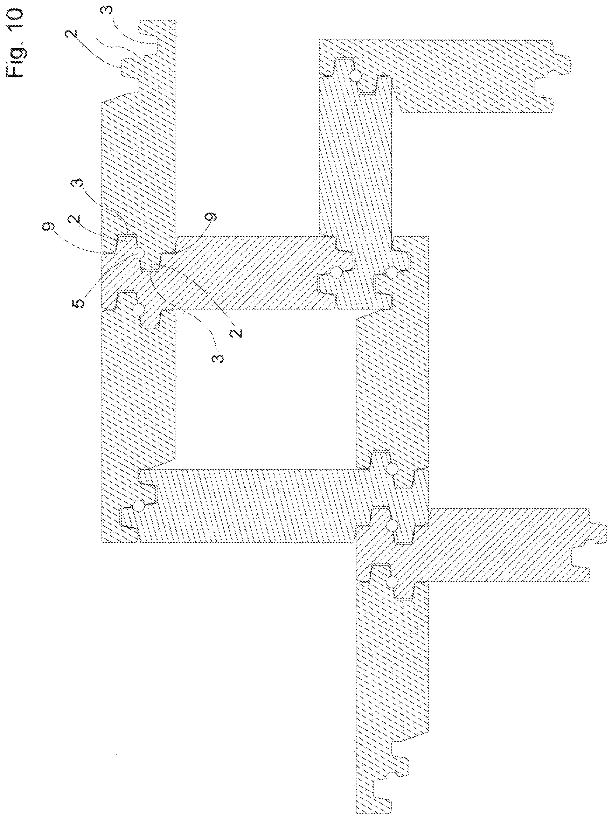

For the design of the panel assemblies it is necessary to make the panels **1** in several combinations of contact surfaces allowing their arbitrary assembly and jointing according to the needs of the project, see Fig. 9 and 10. The first variant of the contact surfaces is to provide one tongue and **2** and one groove **3** on one contact surface of the panel **1** such that their axes are parallel to the longitudinal axis of the panel **1**. The second variant of the embodiment is to provide one tongue **and 2** and one groove **3** on one contact surface of the panel **1** such that their axes are perpendicular to the longitudinal axis of the panel **1**. The third variant of the embodiment is to provide a pair of opposite tongues **2** and a pair of opposite grooves **3** on two opposite sides of one contact surface of the panel **1** so that the axes of both tongues **2** and both grooves **3** are perpendicular to the longitudinal axis of the panel **1**. These variants are combined in the resultant panels **1** in the manufacture, as required by the design of the building so that one panel **1** can comprise any combination of two different contact surfaces or a pair of identical contact surfaces for each pair of contact surfaces of the panel **1**. Examples of some combinations of the shape of the contact surfaces and their combinations on one panel **1**, i.e. the location of tongues **2** and grooves **3** at the ends of one panel **1**, is shown in Fig. 10.

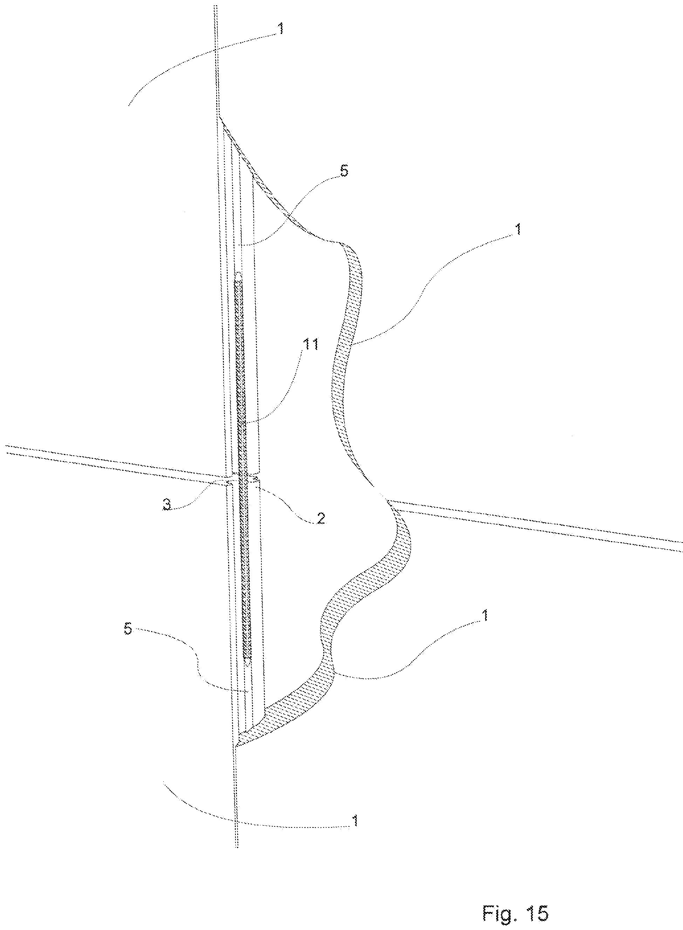

Fig. 15 shows an example of a wall structure of panels **1**, where one anchor pin **11** connects several panels **1** arranged side by side and one above the other.

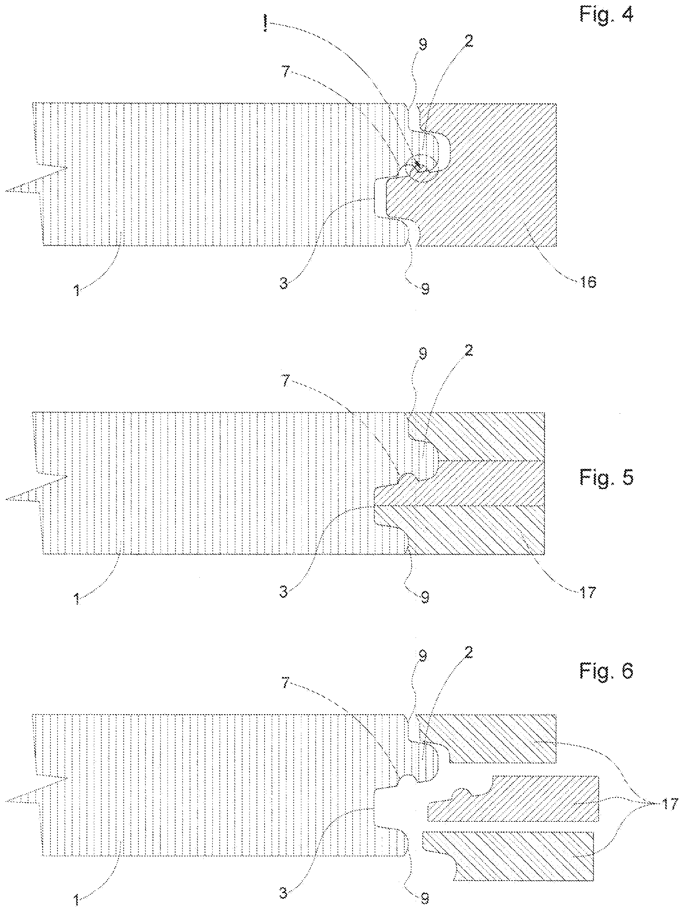

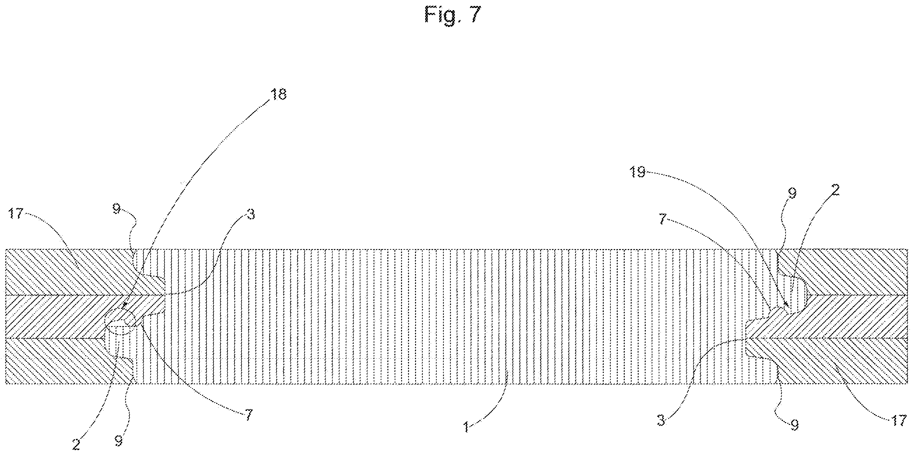

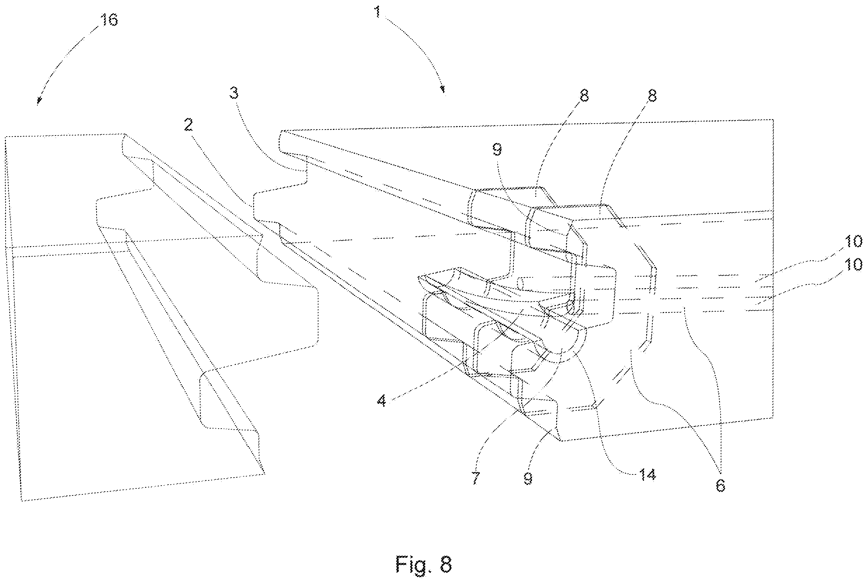

An advantage of the invention is the easier casting technology of the proposed panels **1** so that the panel **1** is cast horizontally and the mould is technologically simple. The production technology is shown in Fig. 4, 5, 6, 7 and 8. Casting the panel **1** in the region of the longitudinal groove in the panel **1** when conventional horizontal casting of the panel **1** in a one-piece mould **16,** as shown in Fig. 4, caused that the mould **16,** after concrete setting, could not be removed without breaking. A possible variant would be split mould **17,** as shown in Fig. 5 and 6. The disadvantage of the split mould **17** is that the manufacture and use of this type of mould is considerably more expensive and the installation more time-consuming than the conventional one-piece mould **16,** and in addition, an air pocket **18** would be formed on one contact surface in place behind the longitudinal groove to prevent leakage of the liquid concrete casting compound. As shown in Fig. 8, the problem has been solved so that the raised shape of the semi-groove **7** in a one-piece mould **16** is provided not by the shape of the mould, but the insert **14** of the anchor **6** and the installed flexible filling **4,** e.g. of polyurethane, which enables the use of a one-piece mould **16** for casting panels **1**, without problems, after setting of the panels **1**, removing it from the mould **16.**

### Industrial Applicability

The invention can be used in the building industry, in particular in the field of construction of external load-bearing and internal walls and partitions made of precast concrete panels.

### List of Reference Numerals Used in the Drawings

- 1: panel
- 2: tongue
- 3: groove
- 4: flexible filling
- 5: cavity
- 6: anchor
- 7: recess
- 8: jaw
- 9: edge contact surface
- 10: horizontal reinforcement
- 11: anchor pin
- 12: quick-setting fixative compound
- 13: root
- 14: insert
- 15: fixing spacer
- 16: one-piece mould
- 17: split mould
- 18: air pocket
- 19: poured-in material

## Claims

1. A precast concrete panel joining system comprising a flat wall panel (1) provided on both contact sides of the panel (1) with both a tongue (2) and a groove (3) continuously connected to the tongue (2), wherein a longitudinal furrow is formed in the transition area between the tongue (2) and the groove (3),
which, in the position of insertion of the tongue (2) and the groove (3) of said wall panel in the groove and tongue of a corresponding wall panel, forms an open cavity (5) from above and/or below between adjacent panels (1), **characterized in that** anchors (6) are arranged inside the panel (1) on both sides of the panel (1) in the transition area between the tongue (2) and the groove (3), wherein each of the anchors (6) comprises a jaw (8) connected to a root (13), wherein the edge profile of the jaw (8) follows fully
the shape of the tongue (2) and the groove (3), and the jaw (8) is also provided with a recess (7) following at least part of the inner periphery of the cavity (5), wherein on each side of the panel (1) there are at least two jaws (8) above each other, the recesses (7) of which are formed by an insert (14) defining said part of the inner periphery of the cavity (5) and connecting the two jaws (8),
and furthermore the system comprises an anchor pin (11) inserted into the cavity (5) delimited by the recesses (7), when the tongue and groove of said wall panel are inserted in the groove and tongue of a corresponding wall panel.

2. The precast concrete panel joining system of claim 1, **characterized in that** the root (13) of the anchor (8) is formed by a horizontal reinforcement (10) passing through the panel (1) from one side to the other and connecting jaws (8) at both ends of the panel (1), which also forms the integrated ring reinforcement of the panel (1).

3. The precast concrete panel joining system of claim 1 or 2, **characterized in that** the recess (7) has a semi-circular cross-section and the insert (14) has the shape of a hollow half-cylinder.

4. The precast concrete panel joining system of any of claims 1 to 3, **characterized in that** the insert (14) is made of metal and forms an integral weldment with a jaw (8), which is also made of metal and has a flat plate shape, the edge section of which has a shape corresponding to the section of the contact side of the panel (1).

5. Method for making a panel j oint of at least two precast concrete panels (1) arranged side by side with a system of any of claims 1 to 4, side, **characterized in that** after placing the panels (1) side by side in vertical position and engaging the tongues (2) into the grooves (3), an anchor pin (11) is inserted into the cavity (5) between the panels (1) formed by recesses (7) of the jaws (8), and after is the anchor pin (11) in the cavity (5) fixed by means of a quick-setting fixative compound (12), e.g. chemical anchor.

6. Method of claim 5, **characterized in that** the peripheral shape of the anchor pin (11) corresponds to the peripheral shape of the cavity (5).

7. Method of claim 6, **characterized in that** the cavity (5) and the anchor pin (11) have a circular cross-section.

8. The panel joint of at least two precast concrete panels (1) arranged side by side, formed by the system of any of claims 1 to 4, **characterized in that** the anchor pin (11) is arranged in the cavity (5) formed by recesses (7) of jaws (8) in the position of the tongues (2) inserted into grooves (3) and the anchor pin (11) is at least partially surrounded in the cavity (5) by a quick-setting fixative compound (12).

9. The panel joint of at least two precast panels (1) arranged one above the other and formed by the system of any of claims 1 to 4, claims 1 to 3, **characterized in that** the anchor pin (11) is arranged in the cavities (5) of the panels (1) arranged one above the other and the anchor pin (11) is at least partially surrounded in the cavity (5) by a quick-setting fixative compound (12).

## Patentansprüche

1. Ein Verbindungssystem für Betonfertigplatten, enthaltend eine flache Wandplatte (1), die auf beiden Kontaktseiten der Platte (1) sowohl mit einer Feder (2) als auch einer durchgehend mit der Feder (2) verbundenen Nut (3) versehen ist, wobei im Übergangsbereich zwischen der Feder (2) und der Nut (3) eine Längsfurche ausgebildet ist, die in der Einsteckposition der Feder (2) und der Nut (3) dieser Wandplatte in die Nut und Feder einer entsprechenden Wandplatte einen von oben und/oder unten offenen Hohlraum (5) zwischen benachbarten Platten (1) bildet, **dadurch gekennzeichnet, dass** innerhalb der Platte (1) auf beiden Seiten der Platte (1) im Übergangsbereich zwischen der Feder (2) und der Nut (3) Anker (6) angeordnet sind, wobei jeder der Anker (6) eine mit einer Wurzel (13) verbundene Backe (8) enthält, wobei das Kantenprofil der Backe (8) vollständig der Form der Feder (2) und der Nut (3) folgt, und die Backe (8) außerdem mit einer Aussparung (7) versehen ist, die zumindest einem Teil des Innenumfangs des Hohlraums (5) folgt, wobei sich auf jeder Seite der Platte (1) mindestens zwei Backen (8) übereinander befinden, deren Aussparungen (7) durch einen Einsatz (14) gebildet werden, der den genannten Teil des Innenumfangs des Hohlraums (5) definiert und die beiden Backen (8) verbindet, und außerdem enthält das System einen Ankerstift (11), der in den durch die Aussparungen (7) begrenzten Hohlraum (5) eingesetzt wird, wenn Nut und Feder der genannten Wandplatte in Nut und Feder einer entsprechenden Wandplatte eingesetzt werden.

2. Verbindungssystem für Betonfertigplatten nach Anspruch 1, **dadurch gekennzeichnet, dass** die Wurzel (13) des Ankers (6) durch eine horizontale Bewehrung (10) gebildet wird, die von einer Seite zur anderen durch die Platte (1) verläuft, und durch Verbindungsbacken (8) an beiden Enden der Platte (1), die gleichzeitig die integrierte Ringankerbewehrung der Platte (1) bildet.

3. Verbindungssystem für Betonfertigplatten nach Anspruch 1 oder 2, **dadurch gekennzeichnet, dass** die Aussparung (7) einen halbkreisförmigen Querschnitt aufweist und der Einsatz (14) die Form eines hohlen Halbzylinders hat.

4. Verbindungssystem für Betonfertigplatten nach einem der Ansprüche 1 bis 3, **dadurch gekennzeichnet, dass** der Einsatz (14) aus Metall besteht und eine integrale Schweißverbindung mit einer Backe (8) bildet, die ebenfalls aus Metall besteht und die Form einer flachen Platte hat, deren Randabschnitt eine, dem Abschnitt der Kontaktseite der Platte (1) entsprechende Form hat.

5. Verfahren zur Herstellung einer Plattenverbindung aus mindestens zwei nebeneinander angeordneten Betonfertigplatten (1) mit einem System nach einem der Ansprüche 1 bis 4, **dadurch gekennzeichnet, dass,** nachdem die Platten (1) in vertikaler Position nebeneinander platziert wurden und die Federn (2) in die Nuten (3) eingerastet sind, ein Ankerstift (11) in den durch die Aussparungen (7) der Backen (8) gebildeten Hohlraum (5) zwischen den Platten (1) eingeführt wird und der Ankerstift (11) anschließend mittels einer schnell abbindenden Befestigungsmasse (12), z. B. eines chemischen Ankers, in dem Hohlraum (5) fixiert wird.

6. Verfahren nach Anspruch 5, **dadurch gekennzeichnet, dass** die Umfangsform des Ankerstiftes (11) der Umfangsform des Hohlraums (5) entspricht.

7. Verfahren nach Anspruch 6, **dadurch gekennzeichnet, dass** der Hohlraum (5) und der Ankerstift (11) einen kreisförmigen Querschnitt aufweisen.

8. Plattenverbindung aus mindestens zwei nebeneinander angeordneten Betonfertigplatten (1), gebildet nach dem System nach einem der Ansprüche 1 bis 4, **dadurch gekennzeichnet, dass** der Ankerstift (11) in dem durch Aussparungen (7) von Backen (8) gebildeten Hohlraum (5) in der Position der in Nuten (3) eingesetzten Federn (2) angeordnet ist und der Ankerstift (11) im Hohlraum (5) zumindest teilweise von einer schnell abbindenden Befestigungsmasse (12) umgeben ist.

9. Plattenverbindung aus mindestens zwei übereinander angeordneten Fertigplatten (1) gebildet nach dem System nach einem der Ansprüche 1 bis 4, **dadurch gekennzeichnet, dass** der Ankerstift (11) in den Hohlräumen (5) der übereinander angeordneten Platten (1) angeordnet ist und der Ankerstift (11) im Hohlraum (5) zumindest teilweise von einer schnell abbindenden Befestigungsmasse (12) umgeben ist.

## Revendications

1. Système d'assemblage de panneaux préfabriqués en béton comprenant un panneau mural plat (1) pourvu sur les deux côtés de contact du panneau (1) d'une languette (2) et d'une rainure (3) reliée en continu à la languette (2), dans lequel une un sillon longitudinal est formé dans la zone de transition entre la languette (2) et la rainure (3), qui, dans la position d'insertion de la languette (2) et de la rainure (3) dudit panneau mural dans la rainure et la languette du panneau mural correspondant, forme une cavité ouverte (5) par le haut et/ou par le bas entre des panneaux adjacents (1), **caractérisé en ce que** des ancrages (6) sont disposés à l'intérieur d'un panneau (1) des deux côtés du panneau (1) dans la zone de transition entre la languette (2) et la rainure (3), où chacun des ancrages (6) comprend une mâchoire (8) reliée à un pied (13), où le profil de bord de la mâchoire (8) épouse entièrement la forme de la languette (2) et de la rainure (3), et la mâchoire (8) est également pourvue d'un renfoncement (7) suivant au moins une partie de la périphérie interne de la cavité (5), où, de chaque côté du panneau (1) se trouvent au moins deux mâchoires (8) superposées, dont les renfoncements (7) sont formés par un insert (14) définissant ladite partie de la périphérie interne de la cavité (5) et reliant les deux mâchoires (8), et en outre le système comprend une goupille d'ancrage (11) insérée dans la cavité (5) délimitée par les renfoncements (7), lorsque la languette et la rainure dudit panneau mural sont insérées dans la rainure et la languette d'un panneau mural correspondant.

2. Système d'assemblage de panneaux préfabriqués en béton selon la revendication 1, **caractérisé en ce que** le pied (13) de l'ancre (6) est formée par un renfort horizontal (10) traversant le panneau (1) d'un côté à l'autre et des mâchoires de raccordement (8) aux deux extrémités du panneau (1), qui forme également le renfort annulaire intégré du panneau (1).

3. Système d'assemblage de panneaux préfabriqués en béton selon la revendication 1 ou 2, **caractérisé en ce que** le renfoncement (7) a une section transversale semi-circulaire et l'insert (14) a la forme d'un demi-cylindre creux.

4. Système d'assemblage de panneaux préfabriqués en béton selon l'une quelconque des revendications 1 à 3, **caractérisé en ce que** l'insert (14) est en métal et forme une soudure solidaire avec une mâchoire (8), qui est également en métal et a une forme de plaque plate, dont la section de bord présente une forme correspondant à la section du côté de contact du panneau (1).

5. Procédé pour réaliser un joint de panneaux d'au moins deux panneaux préfabriqués en béton (1) disposés côte à côte avec un système selon l'une quelconque des revendications 1 à 4, **caractérisé en ce qu'**après avoir placé les panneaux (1) côte à côte en position verticale et engagé le languettes (2) dans les rainures (3), une goupille d'ancrage (11) est insérée dans la cavité (5) entre les panneaux (1) formée par des évidements (7) des mâchoires (8), et après est la goupille d'ancrage (11) dans la cavité (5) fixé au moyen d'un composé fixateur à prise rapide (12), par ex. ancre chimique.

6. Procédé selon la revendication 5, **caractérisé en ce que** la forme périphérique de la goupille d'ancrage (11) correspond à la forme périphérique de la cavité (5).

7. Procédé selon la revendication 6, **caractérisé en ce que** la cavité (5) et la goupille d'ancrage (11) ont une section circulaire.

8. Joint de panneaux d'au moins deux panneaux préfabriqués en béton (1) disposés côte à côte, formé par le système selon l'une quelconque des revendications 1 à 4, **caractérisé en ce que** la goupille d'ancrage (11) est disposée dans la cavité (5) formée par des évidements (7) des mâchoires (8) dans la position des languettes (2) insérées dans les rainures (3) et la goupille d'ancrage (11) est au moins partiellement entourée dans la cavité (5) par un composé fixateur à prise rapide (12 ).

9. Joint de panneaux d'au moins deux panneaux préfabriqués en béton (1) disposés les uns au-dessus des autres et formé par le système selon l'une quelconque des revendications 1 à 4, **caractérisé en ce que** la goupille d'ancrage (11) est disposée dans les cavités (5) des panneaux (1) disposés les uns au-dessus des autres et la goupille d'ancrage (11) est au moins partiellement entourée dans la cavité (5) par un composé de fixation à prise rapide (12).
